# EUROPEAN PATENT APPLICATION

(11) **EP 1 215 574 A1**
(43) Date of publication of application: **19.06.2002**
(21) Application number: 00127150.1
(22) Date of filing: 12.12.2000
(51) Int. Cl.: G06F 9/50, G06F 15/80, G06F 1/32, G06F 15/78

(54) **Method for processing data on an iterative algorithm basis and an apparatus therefore**

(71) Applicant: Sony International (Europe) GmbH, 10785 Berlin (DE)
(72) Inventor: Merkle, Carsten, c/o Adv. Techn. Center Stuttgart, 70327 Stuttgart (DE); Schill, Dietmar, c/o Adv. Techn. Center Stuttgart, 70327 Stuttgart (DE)
(74) Representative: Müller - Hoffmann & Partner

(57) **Abstract**

A method and a processing system (1) is proposed which enable to achieve power savings both by limiting the accuracy of an iterative calculation and by detecting that the iterative calculation has already reached an acceptable result after a certain number of iterations. This is achieved by splitting the iterative calculation to several processing units (2₁ to 2_{N)}. Data to be processed is successively routed through the processing units (2₁ to 2_{N)}, each processing unit (2₁ to 2_{N)} performing at least one iteration. If the iterative calculation has already reached an acceptable result, the processed data is routed to an output interface. If processing units are not needed at the moment, they are dynamically switched down in low power mode. This makes it possible to save energy without compromising performance as the number of iterations which has to be performed can be decided during run-time.

## Description

The invention relates to a method and a system for processing data, in particular on an iterative algorithm basis and a system to perform said method.

Low power consumption is a prime interest for mobile devices using complex algorithms which need a lot of computational power. To decrease power consumption, many different concepts have been proposed.

It is known for example to optimize a clock rate for a multitask processing system by estimating a minimum clock rate sufficient to finish a given set of tasks in certain time. Similarly, document US 5,774,703 discloses the concept of obtaining a constant work load by optimizing the clock speeds, which is done on the basis of a set of clock speeds stored in registers. Document US 5,860,106 optimizes the use of cache by employing ideas from statistical multiplexing and adapts to statistics of a data flow, which results in an optimized system performance.

It is an object of the present invention to provide a method and a system for processing data, in particular on an iterative algorithm basis, which show high potentials of power saving capabilities.

To solve this object, the present invention provides a method for processing data, in particular on an iterative algorithm basis, which is characterized by the characterizing features of claim 1. Further, the present invention provides a system for processing data, in particular for performing the method according to the invention using an iterative algorithm which is characterized by the characterizing features of claim 16. Preferred embodiments of this method and system which are defined in independent claims 1 and 16 respectively, are respectively defined in the respective following dependent claims.

An important aspect of the present invention is that a processing task, preferably an iterating task, is done by involving different processing units. Each processing unit represents a part of a whole processing algorithm, which is constituted by an entirety of the processing units. Preferably, each processing unit performs the same processing/iterating tasks. The involving of different processing units instead of one single processing unit makes it possible to easily save energy, as will become apparent in the following description.

Which specific processing units and which exact number of processing units are employed and/or activated to perform the processing task is dynamically determined. The respective processing units are chosen from a plurality of given processing units. The number and a selection of processing units is determined in accordance to a variable processing or iteration amount limit and/or in accordance to a result of a process of analyzing said data under process and/or of derivatives and/or properties thereof.

This means that a number n of processing units presently used for processing/iterating the data is not fixed but dynamically adapted to changing demands. The number n representing the used processing units generally corresponds to the number of processing steps/iterations used to perform a processing/iteration task, as preferably each processing unit performs a fixed amount of processing/iteration steps. Therefore, the number of performed processing steps/iterations can be dynamically set by changing the number n of presently used processing units. It may be, however, also possible to keep the number of processing steps/iterations in each single processing unit flexible, which would enable to reduce a number of processing steps/iterations by both reducing the number n of presently used processing units and/or by reducing the number of processing steps/iterations of the single processing units itself.

To process/iterate the data, the data is successively routed through a plurality of processing units, said plurality consisting of at least two processing units. Each processing unit processes/iterates the data routed through it by performing at least one iterating/processing step (in the following, "processing" also includes "iterating").

The data may be succesively routed from processing unit to processing unit in a serial manner and/or simultanously routed through several processing units in a parallel manner.

After having routed the data into a processing unit, the data is processed by the processing unit which preferably performs a predetermined number of iterations depending on the structure of the processing unit. The processed data is routed out of the processing unit and is either routed to a data output interface or a succeeding processing unit according to a result of the analyzing process. If the analyzing process yields that a processing/iteration task has already been completed and/or no further iterations are necessary, the processed/iterated data is routed to the data output interface. If the analyzing process yields that the processing/iteration task has not been successfully completed so far, more iterations are needed and the processed/iterated data is routed to the succeeding processing unit therefore.

If the analyzing process yields that the iteration task has already been successfully completed, no further iterations are needed which means that all further processing units do not have to be used. The processing units are therefore switched off or switched down in low power mode. Preferably, a controlling process of switching off or down all unused processing units is a centralized process. However, each processing unit may be capable of switching itself off or switching itself down in low power mode on his own if no data is routed into it, which is equivalent to the fact that the processing unit is presently not needed. As a consequence, by controlling the routing of the data also the dynamically switching off/on process can be controlled, as processing units react "data stream oriented". Each processing unit keeps itself as long in an activated state as data is routed into it. This means that the step of adapting the variable number n of employed processing units being lower or equal to a maximal number nₘₐₓ of usable processing units to a present value p representing the presently needed processing units is done by routing the data to the data output interface after having been routing the data through the p-th processing unit. To switch a processing unit on again, each processing unit may check at given or regular time intervals for data to be inputted. Another possibility is to keep an input part of each processing unit always in an activated state, the input part detecting arriving data to be inputted immediately, and activating the "rest" of the processing unit in case of arriving data.

In another embodiment, each processing unit is capable of switching its succeeding processing unit off or on. A processing unit may for example send a switch off signal to the succeeding processing unit (if existing) before switching itself off in order to assure that all succeeding processing units are switched off. Accordingly, when a processing unit decides that a succeeding processing unit is needed to perform the iteration task, it activates the succeeding processing unit by sending a switch on signal to it. In this embodiment, the data is routed in dependence of the state (on/off) of the processing units, which means that the data outputted by a processing unit is "automatically" routed to the data output interface if the succeeding processing unit is in its deactivated state/ low power mode. In contrast, in the embodiment described above, the data is "actively" routed, and the processing units are "automatically" activated/deactivated in dependence of the routed data.

In the analyzing process, preferably a state of the data and/or of properties and/or derivatives thereof during the data processing is analyzed in preferably each presently used processing unit. The analyzing process may take into account external control information like optimization information. The analyzing process preferably comprises a step of analyzing the data with respect to an iteration accuracy criteria during the data processing/iteration process in the processing units. As a consequence, data being iterated in a processing unit is routed to the data output interface if the analyzing process yields that a desired iteration accuracy has already been reached. In other words, the data is routed "data event driven" (e. g. by a iteration accuracy event) either to a succeeding processing unit or the data output interface.

Thus, the method disclosed in the above description makes it possible to dynamically adapt the number of iterations being executed by an iterative algorithm to changing demands. For example, if a battery of a mobile computing device reaches the end of its capacity, it is possible to reduce the accuracy of the iterative algorithm performed on this device by decreasing the iteration amount limit, which results in a reduced number of required iterations. This makes it possible to deactivate processing units presently not needed because of the reduction in iteration number, which results in power savings. Further, making use of the analyzing process, it is possible to adjust the number of iterations to be performed dynamically according to a data event, thus avoiding unnecessary further data processing if the data being processed in a processing unit does already comply with the iteration accuracy criteria, for example. The iteration accuracy criteria may be dynamically set in dependence of external control information. e. g. present battery capacity information, thereby adapting the number of iterations performed to actual power resources.

In a preferred embodiment, each processing unit performs the same number and kind of iteration steps derivable of a single mathematical function. For example, each processing unit performs five iterations of a channel demodulation and decoding algorithm being based on an iterative concept. However, each processing unit may also perform different iteration steps of a respective different iteration algorithm, the entirety of different iteration algorithms of the corresponding processing units yielding the actual "main" iteration algorithm.

Thus, the invention makes it possible to achieve power savings both by limiting the accuracy of a calculation and by detecting that calculation has already reached an acceptable result after a certain number of iterations. This makes it possible to save energy without compromising performance as the number of iterations which has to be performed can be decided during run-time.

The above-described method can be realized in software, in hardware or in a mixture of software and hardware ( e. g. a series of DSPs).

In the following description, the processing system provided by the present invention will be explained.

The processing system is capable of dynamically chosing from a plurality of provided processing units processing units being or to be employed and/or activated for processing data and in particular the number thereof in accordance to a variable processing or iteration amount limit and/or in accordance to a result of a process of analyzing said data under process and/or of derivatives and/or properties thereof.

In a preferred embodiment, the processing system comprises at least two processing units. Each processing unit is connected to at least one further processing unit and is capable of processing data routed through the processing unit by performing at least one iteration of the iterative algorithm. Preferably, the processing units are connected in series, which means that except of a first and a final processing unit of the processing unit series every processing unit is connected exactly to two processing units being the preceding processing unit and the succeeding processing unit. However, it may also be possible that a processing unit has several preceding processing units and/or several succeeding processing units.

The processing system further comprises an analyzing means for analyzing the data during the data processing in the processing units, which may be centralized and connected to the processing units. The analyzing means may also comprise different analyzing units being located in the processing units, in a corresponding output means or in the corresponing routing switches, respectively. The processing units are dynamically activatable/deactivatable by the analyzing means according to a result of the analyzing process and/or to the iteration amount limit.

In a preferred embodiment, each processing unit comprises an input means for routing the data to be processed into the processing unit and an output means for routing processed data out of the processing unit. Two different processing units are connected via a data connection unit. The data connection unit connects the output means of one processing unit to an input means of the respective connected processing unit.

Preferably each data connection unit between two processing units comprises a routing switch which is capable of routing output data of one processing unit either to the input means of the succeeding processing unit or to the data output interface. The routing switches are responsible for routing the data to be processed and are controlled by the analyzing means.

The analyzing means may comprise control information processing means for processing external control information supplied to the analyzing means. For example, the analyzing means may be supplied with controlling information of the device instructing the analyzing means to limit the number of performed iterations.

As a generalization of the above invention, a system showing N processing units may be seen as a single physical circuitry operating at a maximally N-times higher clock frequency. The analyzing means then decides whether data being processed to route to the data output interface or whether to reinsert it into the succeeding processing unit and performing an additional processing/iteration. Power savings result from a lower number of iterations performed.

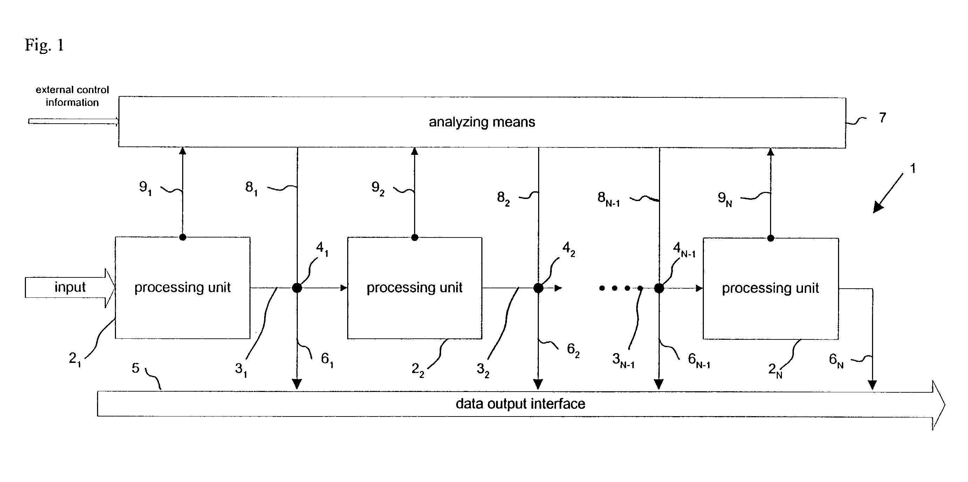

Further features and advantages of a preferred embodiment of a system according to the present invention will be explained below in conjunction with the accompanying drawing, in which
- **Fig. 1**: shows a schematic drawing of a system for processing data according to the present invention;

In the following description, making reference to Fig. 1, a preferred embodiment of a processing system is described.

A processing system 1 comprises N processing units 2₁ to 2_{N}. Each of the processing units 2₁ to 2_{N} performs a fraction of a maximum number of processing/iteration steps. The processing units 2₁ to 2_{N} are connected with each other via a respective unit data connection 3₁ to 3_{N-1}. Each unit data connection 3₁ to 3_{N-1} comprises a routing switch 4₁ to 4_{N-1}, respectively. The routing switches 4₁ to 4_{N-1} are connected to a data output interface 5 by a respective output data connection 6₁ to 6_{N-1}, and to an analyzing means 7 via a respective switch control data connection 8₁ to 8_{N}, respectively. Each processing unit 2₁ to 2_{N} comprises input means and output means, respectively (not shown). An output means of a final processing unit 2_{N} (not shown) is only connected to the data output interface 5.

A first processing unit 2₁ connected to an input interface (not shown) is always activated and represents a minimum system workload. The routing switches 4₁ to 4_{N-1} route the data either to a respective input means of the next processing unit 2₂ to 2_{N} or to the data output interface 5.

The final processing unit 2_{N} is only activated during peek workload times. The routing switches 4₁ to 4_{N-1} are controlled by the analyzing means 7 via the switch control data connections 8₁ to 8_{N}. Information required to take a decision in the analyzing means 7 about how routing output data of a processing unit 2₁ to 2_{N-1} may be derived from side information sent by the processing units 2₁ to 2_{N} via side information data connections 9₁ to 9_{N} to the analyzing means 7 and/or may be influenced by external control information, for example an optimization criteria. Processing units 2₂ to 2_{N} which do not receive data are switched off or down into low power mode, which results in power savings.

## Claims

1. Method for processing data, in particular on an iterative algorithm basis, **characterized in that**
- processing units (2₁ to 2_{N}) being or to be employed and/or activated for processing data - and in particular the number thereof - are dynamically determined and/or chosen from a plurality of given processing units (2₁ to 2_{N})
- in accordance to a variable processing or iteration amount limit and/or
- in accordance to a result of a process of analyzing said data under process and/or of derivatives and/or properties thereof.

2. Method according to claim 1, **characterized by** routing data through at least a part of the given processing units (2₁ to 2_{N}) in order to process the data.

3. Method according to claim 2, **characterized by** succesively routing data from processing unit to processing unit (2₁ to 2_{N}) in a serial manner and/or simultanously routing data through several processing units (2₁ to 2_{N}) in a parallel manner.

4. Method according to claim 2 or 3, **characterized by** performing at least one processing or iterating step in each processing unit (2₁ to 2_{N}) through which data is routed to process the data.

5. Method according to anyone of the claims 2 to 4, **characterized by** routing the processed data after having been routed it through a processing unit (2₁ to 2_{N}) either to a data output interface (5) and/or through a succeeding processing unit (2₂ to 2_{N}) according to the result of the analyzing process.

6. Method according to anyone of the claims 2 to 5, **characterized in that** the step of dynamically determining a number n of employed processing units (2₁ to 2_{N}) to a present value p at least comprises the step of routing the data to the data output interface (5) after having been routing the data through the p-th processing unit (2₁ to 2_{N}).

7. Method according to anyone of the claims 2 to 6, **characterized by** dynamically switching off or switching down in low power mode all processing units (2₂ to 2_{N}) through which presently no data is routed.

8. Method according to anyone of the claims 2 to 5, **characterized in that** the step of dynamically determining a number n of employed processing units (2₁ to 2_{N}) to a present value p at least comprises the step of sending a switch on or a switch off signal from the p-th processing unit (2₁ to 2_{N}) to the succeeding processing unit (2₂ to 2_{N}).

9. Method according to claim 8, **characterized by** routing of the data outputted by a processing unit (2₁ to 2_{N}) to the data output interface (5) if the succeeding processing unit (2₂ to 2_{N}) is in its switched off state.

10. Method according to anyone of the preceding claims, **characterized by** analyzing the data and/or the properties thereof during the data processing in each processing unit (2₁ to 2_{N}) to perform the analyzing process.

11. Method according to anyone of the preceding claims, **characterized in that** the analyzing process comprises a step of analyzing a processing or iteration accuracy of the data during the iteration process in each processing unit (2₁ to 2_{N}).

12. Method according to claim 11, **characterized in that** data being processed or iterated in a processing unit (2₁ to 2_{N}) is routed to the data output interface (5) if the analyzing process yields certain properties of the data under process, in particular a desired processing or iteration accuracy.

13. Method according to claim 12, **characterized in that** the processing or iteration accuracy and/or the processing or iteration amount limit is dynamically set in dependence of supplied external control information.

14. Method according to anyone of the preceding claims, **characterized in that** each processing unit (2₁ to 2_{N}) performs such iteration steps that an entirety of all said iteration steps constitutes one single iteration algorithm.

15. Method according to anyone of the preceding claims, **characterized in that** the data processing is performed digitally, wherein the data to be processed and the processed data is digital data.

16. System (1) for processing data, in particular for performing the method of anyone of the claims 1 to 15,
- said system being capable of dynamically chosing from a plurality of provided processing units (2₁ to 2_{N}) processing units (2₁ to 2_{N}) being or to be employed and/or activated for processing data and in particular the number thereof
- in accordance to a variable processing or iteration amount limit and/or
- in accordance to a result of a process of analyzing said data under process and/or of derivatives and/or properties thereof.

17. System (1) according to claim 16, **characterized in that** said plurality of provided processing units (2₁ to 2_{N}) comprises at least two processing units (2₁ to 2_{N}), each processing unit (2₁ to 2_{N}) being connected to at least one different processing unit (2₁ to 2_{N}) and being capable of processing data routed through the processing unit (2₁ to 2_{N}) by performing at least one processing or iteration step.

18. System (1) according to claim 16 or 17, **characterized by** analyzing means (7) for analyzing the data and/or derivatives and/or properties thereof during the data processing in the processing units (2₁ to 2_{N}).

19. System (1) according to anyone of the claims 17 to 18, **characterized in that** all or at least a part of the processing units (2₁ to 2_{N}) are connected in series, wherein an output means of a final processing unit (2) is only connected to the data output interface (5).

20. System (1) according to anyone of the claims 17 to 19, **characterized in that** at least a part of the processing units (2₁ to 2_{N}) are connected in a parallel manner.

21. System (1) according to anyone of the claims 17 to 20, **characterized in that** each processing unit (2₁ to 2_{N}) comprises input means for routing the data to be processed into the processing unit (2₂ to 2_{N}) and output means for routing processed data out of the processing unit (2₁ to 2_{N}), wherein two connected processing units (2₁ to 2_{N}) are connected via a respective data connection unit (3₁ to 3_{N-1}), respectively, which connects an output means of one processing unit (2₁ to 2_{N-1}) to input means of the respective connected processing unit (2₁ to 2_{N-1})

22. System (1) according to claim 21, **characterized in that** each data connection unit (3₁ to 3_{N-1}) between two processing units (2₁ to 2_{N}) comprises a routing switch (4₁ to 4_{N-1}) which is connected to a data output interface (5) and the analyzing means (7) for routing output data from one processing unit (2₁ to 2_{N}) either to the input means of the succeeding processing unit (2₂ to 2_{N}) or to the data output interface (5) according to a result of the analyzing means (7) and/or to the changeable iteration amount limit or if the succeeding processing unit (2₂ to 2_{N}) is in its switched off state.

23. System (1) according to anyone of the claims 18 to 22, **characterized in that** the analyzing means (7) is centralized.

24. System (1) according to anyone of the claims 18 to 22, **characterized in that** the analyzing means (7) comprises different analyzing units being located in the processing units (2₁ to 2_{N}), in the corresponding output means or in the corresponing routing switches (3₁ to 3_{N-1}), respectively.

25. System (1) according to anyone of the claims 18 to 24, **characterized in that** the analyzing means (7) comprises control information processing means for processing external control information supplied to the analyzing means (7).
